# EUROPÄISCHE PATENTSCHRIFT

(11) **EP 0 644 674 B1**
(45) Veröffentlichungstag und Bekanntmachung des Hinweises auf die Patenterteilung: **02.01.2003**
(21) Anmeldenummer: 94114695.3
(22) Anmeldetag: 19.09.1994
(51) Int. Cl.: H04L 1/20, G10L 19/00, H04M 3/22, H04Q 7/34

(54) **Verfahren zum Beurteilen der Übertragungsqualität einer Sprach-Übertragungsstrecke**
Method of transmission quality estimation of a speech transmission link
Procédé d'estimation de la qualité de transmission d'une voie de transmission de parole

(30) Priorität: 22.09.1993 CH 285393
(43) Veröffentlichungstag der Anmeldung: 22.03.1995
(73) Patentinhaber: Ascom AG, 3000 Bern 14 (CH)
(72) Erfinder: Di Pietro, Gianni, CH-4500 Solothurn (CH); Zglinski, Ziemowit, CH-4528 Zuchwil (CH)
(74) Vertreter: Roshardt, Werner Alfred, Dipl.-Phys.

(56) Entgegenhaltungen:
- EP-A- 0 114 463
- WO-A-94/00922
- DE-A- 3 513 361
- DE-A- 3 708 002
- GB-A- 1 455 712
- US-A- 5 040 215
- US-A- 5 220 640
- PROCEEDINGS OF THE INTERNATIONAL TEST AND MEASUREMENT CONFERENCE, PORTLAND, MAY 21 - 31, 1992, Nr. CONF. 11, 29.Mai 1992, VON RECKLINGHAUSEN D R, Seiten 180-190, XP000300176 HERRE J ET AL: "ANALYSIS TOOL FOR REALTIME MEASUREMENTS USING PERCEPTUAL CRITERIA"
- IEE PROCEEDINGS I. SOLID- STATE & ELECTRON DEVICES, Bd. 136, Nr. 5, PART 01, 1.Oktober 1989, Seiten 317-324, XP000070252 DIMOLITSAS S: "OBJECTIVE SPEECH DISTORTION MEASURES AND THEIR RELEVANCE TO SPEECH QUALITY ASSESSMENTS"
- IEEE COMMUNICATIONS MAGAZINE, Bd. 26, Nr. 10, 1.Oktober 1988, Seiten 36-44, XP000066456 NOBUHIKO KITAWAKI ET AL: "QUALITY ASSESSMENT OF SPEECH CODING AND SPEECH SYNTHESIS SYSTEMS"

## Beschreibung

Die Erfindung betrifft ein Verfahren zum Beurteilen der Übertragungsqualität einer Sprach-Ubertragungsstrecke entsprechend dem Oberbegriff von Anspruch 1.

Die Bereitstellung einer guten Übertragungsqualität ist das Anliegen aller Netzbetreiber, so lange es elektrische Übertragungsstrecken gibt. Die Frage, was unter Qualität zu verstehen und wie sie messtechnisch erfassbar ist, bildet jedoch nach wie vor ein erhebliches Problem. Aus der Schrift GB 1 455 712 ist z.B. eine erste Methode bekannt für den Test einer Übertragungsqualität. Hierbei erfolgt ein Vergleich eines Eingangs-Testsignals mit dem zugeordneten Ausgangssignal. Das Differenzsignal dient dabei als Wert zur Beurteilung der im einzelnen nicht definierten Grösse "Qualität".

Die Schrift EP-A-0 114 463 beschreibt eine Einrichtung zum Messen der Verbindungsqualität zwischen einem Sender und einem Empfänger. Hierbei werden kontinuierlich eine Vielzahl von Signaltönen übertragen. Die empfangenen Töne werden digitalisiert und mittels einer Fouriertransformation aus der Zeitebene in die Frequenzebene gebracht. Zur Beurteilung der Verbindungsqualität dienen dann spezielle Parameter der transformierten Töne.

Aus der Schrift DE-A-35 13 361 ist eine weitere Methode für die Qualitätsmessung bekannt, insbesondere für Funkübertragungskanäle während der laufenden Übertragung. Hierzu werden zum Erfassen von Gleichkanalstörungen schnelle und langsame Schwankungen getrennt gemessen und hieraus ein Qualitätsindikator abgeleitet.

Den genannten Methoden ist gemeinsam, dass mehr oder weniger willkürliche Angaben für die Beurteilung der Grösse "Qualität" benutzt werden. Diese Angaben weisen keinen direkten Bezug zum subjektiven menschlichen Empfinden auf, insbesondere zur Bewertung, ob menschliche Sprache von einer empfangenden Person klar verstanden werden kann oder nicht. Aus diesem Grund ist es bis heute üblich, geschulte Testpersonen an kritische Empfangsstellen für z.B. Mobiltelefon-Verbindungen zu beordern. Diese Personen entscheiden anhand von gesprochenen Textpassagen, z.B. ausgewählten Sätzen in einer beliebigen Sprache, ob die vorgefundenen Empfangsqualitäten befriedigend oder nicht ausreichend und damit ungenügend sind.

Es liegt auf der Hand, dass die Testmethode mit Testpersonen finanziell und zeitlich sehr aufwendig ist. Weiter unterliegt diese Methode subjektiven Schwankungen, die in den Unterschieden der verschiedenen Testpersonen, derem jeweiligen Befinden und deren Stimmungen begründet sind.

Hieraus ergibt sich die Aufgabe der Erfindung, eine Methode anzugeben, die es erlaubt, auf automatischem Weg reproduzierbare Beurteilungsergebnisse zu gewinnen, die etwa denjeningen entsprechen, die die genannten Testpersonen ermitteln würden. Dies bedeutet, dass eine Methode angegeben werden soll, die eine der menschlichen Gehör-Wahrnehmung nachempfundene Qualitätsbeurteilung automatisch ermöglicht.

Die Lösung dieser Aufgabe ist durch den kennzeichnenden Teil von Anspruch 1 gegeben. Die abhängigen Ansprüche geben Ausgestaltungen der Erfindung an.

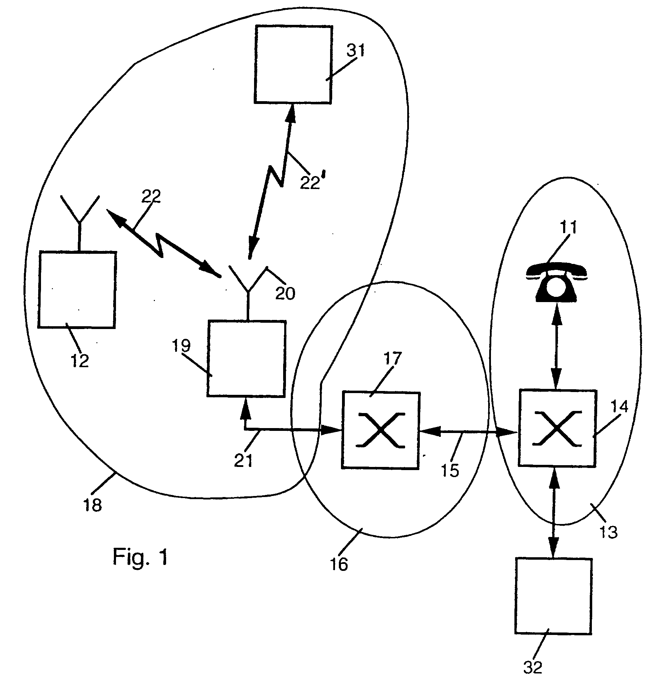

In folgenden wird die Erfindung anhand einer einzigen Figur beispielsweise näher beschrieben. Die Figur zeigt das Blockschaltbild einer Übertragungsstrecke für den Fall einer Sprachverbindung zwischen einem leitungsgebundenen Telefon 11 und einem Mobiltelefon 12, z.B. einem Autotelefon. Das ortsfeste Telefon 11 gehört beispielsweise einem Privatnetz 13 an, das durch eine Hauszentrale 14 symbolisiert ist. Diese Hauszentrale 14 ist über eine fest installierte Verbindungsleitung 15 mit dem öffentlichen Telefonnetz 16 verbunden, symbolisiert durch eine Amtszentrale 17.

Das öffentliche Telefonnetz 16 arbeitet nun mit einem Mobiltelefonnetz 18 zusammen, was durch einen ortsfesten Mobil-Knoten 19 mit Antenne 20 und durch eine Verbindungsleitung 21 symbolisiert ist. Zwischen der Antenne 20 und dem Mobiltelefon 12 besteht schliesslich eine Funkverbindung 22, die bezüglich der Übertragungsqualität zwischen den jeweils zwei Telefonen 11, 12 im allgemeinen am kritischsten ist.

Zur Beurteilung der Übertragungsqualität wird eine nachfolgend zu beschreibende Messapparatur an die beiden Enden der Übertragungsstrecke so angeschlossen, dass sie die Übertragungsstrecke gleich oder zumindest sehr ähnlich wie ein menschlicher Benutzer verwendet. Dies bedeutet, dass die genannten Enden möglichst nahe der Sprechkapsel eines sendeseitigen Telefons bzw. der Hörkapsel eines empfangsseitigen Telefons liegen sollten. Aus praktischen Gründen und weil die Einflüsse der Endgeräte, d.h. der Telefone gering und bekannt sind, können natürlich möglichst unproblematische Schnittstellen als "Enden" verwendet werden, z.B. eine Telefon-Wandsteckdose auf der Netzseite und die Funkverbindung 22, sofern die antennenseitigen Schaltkreise der Messapparatur identisch sind zu denen des Mobiltelefons 12.

In der Figur bezeichnet das Bezugszeichen 31 eine mobile Messeinheit, die z.B. in einem Automobil installiert ist und von der Fahrzeugbatterie gespeist wird. Diese Messeinheit 31 ist über eine zu testende Funkverbindung 22' mit dem Mobilknoten 19 verbunden. Es ist weiter eine stationäre Messeinheit 32 vorgesehen, die mit dem Telefonnetz 13 verbunden ist. Die Messeinheiten 31 und 32 bilden zusammen die genannte Messapparatur, mit deren Hilfe die Qualität der Übertragungsstrecke durch das Privatnetz 13, das öffentliche Netz 16 und vor allem die Funkverbindung 22 bzw. 22' testbar ist.

Das Verfahren zur Beurteilung der Übertragungsqualität basiert darauf, dass als Testsignale Sequenzen SS menschlicher Sprache verwendet werden. Hierin stimmt das Verfahren mit dem eingangs geschilderten Verfahren überein, bei dem menschliche Testpersonen die Beurteilung vornehmen. Als besonders günstig hat sich die Verwendung eines kurzen Satzes erwiesen, wobei die Teile des Satzes abwechselnd von einer weiblichen und von einer männlichen Stimme gesprochen sind. Die Dauer des Satzes soll dabei zwischen etwa 2 bis 10 Sekunden liegen, z.B. bei 5 s. Längere Sequenzen lassen sich problemlos dadurch gewinnen, dass der kurze Satz beliebig oft und unmittelbar aufeinanderfolgend ausgesendet und entsprechend empfangen wird. Die Sprache, in der der Satz gesprochen wird, spielt keine Rolle. Es kann damit jede beliebige Sprache verwendet werden.

Das Verfahren basiert weiter auf den Eigenschaften neuronaler Netze, insbesondere auf der Trainierbarkeit solcher Netze. Weiter basiert es auf geeigneten Vor- und Nachverarbeitungsmethoden, die die zu handhabenden Daten so reduzieren und verändern, dass für das verwendete neuronale Netz geeignete Ein- bzw. Ausgabewerte entstehen.

Unter einem neuronalen Netz wird eine Vorrichtung verstanden, die eine Vielzahl von Eingangsneuronen über eine (andere) Vielzahl Verbindungen und über eine verdeckte Schicht von Neuronen mit einigen wenigen Ausgangsneuronen verbindet. Es erlaubt nach einer Trainingsphase, beliebige, vorgegebene Ausgabemuster zu erkennen. Hierzu wird beispielsweise auf S. Grossberg, <Nonlinear Neuronal Networks: Principles, Mechanisms and Architectures>, Neuronal Networks Nr. 1, 1988, S. 17-61 verwiesen.

Dem neuronalen Netz ist wie angedeutet eine Vorverarbeitungseinheit vorgeschaltet und fakultativ eine Nachverarbeitungseinheit nachgeschaltet. Die Vorverarbeitungseinheit erhält über ihren Eingang die zu beurteilenden Sprachsequenzen SS, die die zu testende Übertragungsstrecke durchlaufen haben. Die Vorverarbeitungseinheit wandelt diese Sequenzen SS in Zwischenwerte ZW um, die in das neuronale Netz einlaufen. Das neuronale Netz bewertet die jeweiligen Zwischenwerte ZW und ordnet diesen bzw. der jeweiligen Sprachsequenz SS über seine unterschiedlichen Ausgangsaktivierungen eine Menge von beispielsweise zwei oder drei möglichen Wertungswerten WW zu. Die möglichen Wertungswerte lassen sich dabei den Begriffen <gut> und <schlecht> bzw. <gut>, <mittel> und <schlecht> zuordnen, die in menschlich verständlicher Art die jeweilige Übertragungsqualität angeben.

Im speziellen sind für die genannte Vorverarbeitung wenigstens folgende Verfahrensschritte vorgesehen:
- Es wird der zu verwendenden Sprachsequenz SS ein Synchronisationsmuster SM vorangestellt, das auf der Empfangsseite durch eine Kreuzkorrelation leicht zu erkennen ist. Dieses Muster SM dient zum Festlegen eines möglichst exakten Startzeitpunktes bei jeder empfangenen Sequenz SS und weist eine zeitliche Länge von etwa 50 bis 100 ms auf.
- Auf der Empfangsseite muss die Sprachsequenz SS in digitaler Art vorliegen. Bei digitaler Übertragung liegen von vorne herein digitale Abtast- bzw. Amplitudenwerte AP in genormten, zeitlichen Abständen vor. Bei analoger Übertragung muss das analoge Empfangssignal in bekannter Art abgetastet werden, was in festgelegten Abtastschritten AS von z.B. 125 µs entsprechend 8 kbit/s jeweils einen Amplitudenwert AP ergibt.
- Sobald der Startzeitpunkt bestimmt ist, wird die nachfolgende Sprachsequenz SS in eine Vielzahl von Zeitintervalle ZI unterteilt. Die Unterteilung kann so erfolgen, dass alle Zeitintervalle gleichlang sind. Dies bedeutet z.B., dass die Sequenz SS in 300 Intervalle zu 256 Abtastschritte AS unterteilt wird. Es können aber auch ungleichlange Zeitintervalle ZI gebildet werden, z.B. in Abhängigkeit von der Art der jeweils momentanen Sprachsignale, d.h. von Sprachpause, vokalem Laut usw. Die Intervalle ZI können sich weiter gegenseitig z.B. um 50% überlappen. Dies bedeutet, dass bei 256 Abtastschritten AS pro Zeitintervall jeweils 128 dieser Abtastschritte des jeweils nächsten Zeitintervalls ZI gleich sind. Dies vermindert die Wahrscheinlichkeit für sehr abrupte Übergänge zwischen benachbarten Intervallen ZI.
- Für jedes Zeitintervall ZI der Sprachsequenz SS wird aus den diversen Amplitudenwerten AP aller Abtastschritte AS das charakteristische Frequenzspektrum bestimmt, das dem jeweiligen Zeitintervall ZI zugeordnet ist.
- Das jeweilige Frequenzspektrum wird bezüglich der ihm innewohnenden Energie beurteilt und einer von z.B. 18 Klassen zugeordnet und normiert.
- Es werden die Differenzwerte aller normierten Werte aller Zeitintervalle ZI der vollständigen Sprachsequenz SS mit den entsprechenden Werten einer bei bester Übertragungsqualität empfangenen Referenzsequenz gebildet. Hierdurch werden mit optimaler Selektivität die Abweichungen der jeweiligen, zu beurteilenden Sprachsequenz SS von den besten zu erwartenden Verhältnissen gewonnen. Insgesamt entstehen hierbei beispielsweise 5400 Differenzwerte. Diese Differenzwerte bilden im wesentlichen die genannten Zwischenwerte ZW, d.h. die Eingangswerte für das neuronale Netz.

Den genannten Verfahrensschritten der Vorverarbeitung kann eine beliebige Anzahl weiterer Schritte beigefügt werden. Als derartige Schritte werden genannt:
- Filterungen durch z.B. Hochpassfilter bzw. selektive Verstärkung zum relativen Anheben hoher Frequenzen,
- Formung der Werte eines Zeitintervalls ZI mit Hilfe eines Hamming-Fensters zum Eliminieren krasser Randwerte,
- Normierung der Amplitudenwerte zur Berücksichtigung unterschiedlicher Lautstärken der empfangenen Sprachsequenz SS.

Die genannte, fakultative Nachverarbeitung der Ausgangsaktivierungen bzw. der Wertungswerte WW des neuronalen Netzes besteht in einer Interpretation dieser Werte WW durch eine Fuzzy-Logik. Eine Fuzzy-Logik ist in der Lage, aus der Art der jeweiligen Aktivierungen an den Ausgängen des neuronalen Netzes jeweils einen zugeordneten Wahrscheinlichkeitswert zu bestimmen. Die Zahl der möglichen Wahrscheinlichkeitswerte wird hierdurch grösser als die Zahl der möglichen Wertungswerte WW. Den Wahrscheinlichkeitswerten lassen sich dabei die menschlich verständlichen Wertungen <sehr gut>, <gut>, <befriedigend>, <ausreichend> und <ungenügend> zuordnen.

Es ist nun wichtig, die für den entscheidenden Beurteilungsschritt notwendige Beurteilungslogik in einer Vorbereitungsphase zu trainieren. Hierzu wird die vorgegebene Sprachsequenz SS bei allen denkbaren Übertragungsqualitäten auf der Empfangsseite von geeigneten Personen bezüglich ihrer Qualität bzw. Sprachverständlichkeit beurteilt. Die hierbei gegebenen, unterschiedlichen Empfangs-Sprachsequenzen SS und die zugeordneten menschlichen Beurteilungen werden sodann gemeinsam in die empfangsseitige Messeinheit 31 und/oder 32 eingegeben. Hierdurch lernt die jeweilige Messeinheit bzw. das in ihr enthaltene neuronale Netz in der Folge entsprechende Sprachsequenzen SS beliebiger Qualität selbständig zu beurteilen, d.h. den genannten Wertungen <gut>, <mittel> oder <schlecht> zuzuordnen.

Nach der Vorbereitungsphase verhält sich die empfangsseitige Messeinheit 31, 32 dann in der eigentlichen Arbeitsphase, d.h. einer beliebig lange andauernden zweiten Phase bezüglich der Sprachbeurteilung gleich oder zumindest ähnlich wie eine menschliche Testperson.

Alle genannten Verfahrensschritte lassen sich in Kombination mit dem neuronalen Netz auf einem Computer installieren. Damit bilden die beiden Messeinheiten 31, 32 in bevorzugter Ausbidung Computer, z.B. Personalcomputer. Die Rechen- und Speicherleistung lässt sich dabei gezielt erhöhten, z.B. durch eine geeignete Zusatzplatine. Weiter lässt sich auch die auszusendende Sprachsequenz SS digital speichern. Solche Personalcomputer lassen sich sowohl als sendeseitige als auch als empfangsseitige Messeinheit verwenden. Hierdurch kann ohne weiteres die Beurteilung der Übertragungsqualität in beiden Richtungen vorgenommem werden, entweder sukzessive oder auch gleichzeitig.

Die Computer der beiden Messeinheiten 31, 32 sind hierbei weiter in der Lage, die ermittelten Beurteilungs- bzw. Ausgangswerte AW geeignet zu speichern. Hierunter ist z.B. die Speicherung zusammen mit Zeit- und Ortsangaben zu verstehen, was eine spätere Auswertung nach beliebigen Gesichtspunkten zulässt.

Es ist eine im wesentlichen praktische Angelegenheit, wie die beschriebenen Messeinheiten 31, 32, 33 im einzelnen ausgebildet werden. Bevorzugt wird für jede Übertragungsrichtung, d.h. von der mobilen Messeinheit 31 zur stationären Messeinheit 32 und umgekehrt von der stationären Messeinheit 32 zur mobilen Messeinheit 31 eine vollständige Beurteilungsmöglichkeit vorgesehen. Dies bedeutet, dass beide Messeinheiten 31, 32 ausgerüstet sind zum Aussenden der Sprachsequenzen SS und zum Empfangen der von der anderen Messeinheit ausgesandten Sequenzen. Weiter ist auch eine Beurteilung der Übertragungsqualität von der mobilen Messeinheit 31 zu einer anderen mobilen Messeinheit möglich.

Wie die vorhergehende Beschreibung zeigt, gibt es eine erhebliche Menge von Varianten zur Durchführung des geschilderten Verfahrens. So kann z.B. das neuronale Netz so aufgebaut sein, dass statt der genannten zwei oder drei möglichen Wertungswerte WW deren fünf ausgegeben werden. Weiter kann die Art der Aktivierungen an den Ausgängen variieren. Entscheidend ist bei den Varianten stets, dass zum Beurteilen der Übertragungsqualität Sprachsequenzen SS dienen, die durch eine trainierte Beurteilungslogik bezüglich ihrer Verständlichkeit am Empfangsort gleich oder zumindest ähnlich beurteilt werden wie durch eine ausgebildete Testperson, also nach subjektiv menschlichen Kriterien.

## Patentansprüche

1. Verfahren zum Beurteilen der Übertragungsqualität einer Sprach-Übertragungsstrecke,
wobei sendeseitig Prüfsignale ausgesendet und empfängerseitig die zugeordneten Empfangssignale in Bezug auf die Übertragungsqualität beurteilt werden,
**dadurch gekennzeichnet,**
- **dass** jedes Prüfsignal eine vorgegebene Sequenz (SS) menschlicher Sprache ist, der ein Synchronisationsmuster (SM) vorangestellt ist,
- **dass** empfangsseitig wenigstens drei serielle Verarbeitungsschritte vorgesehen sind,
- **dass** im ersten Verarbeitungsschritt das jeweilige Synchronisationsmuster (SM) erkannt und hierdurch der Startzeitpunkt der nachfolgenden Sequenz (SS) festgelegt wird,
- **dass** im zweiten Verarbeitungsschritt durch mehrere serielle Teilschritte eine erste Vielzahl jeweiliger Zwischenwerte (ZW) gebildet wird,
indem die jeweilige Sequenz (SS) in eine entsprechende, erste Vielzahl von Zeitintervallen (ZI) zerlegt wird, die jeweils eine zweite Vielzahl diskreter, zeitlich aufeinanderfolgender Amplitudenwerte (AP) umfassen,
indem den jeweiligen Amplitudenwerten (AP) jedes Zeitintervalls (ZI) die jeweils passende Klasse einer dritten Vielzahl von Klassen zugeordnet wird, und
indem für jedes Zeitintervall (ZI) die Differenz aus der jeweiligen Klasse und derjenigen Klasse gebildet wird, die dem entsprechenden Zeitintervall (ZI) für eine bei bester Übertragungsqualität empfangene Sequenz (SS) zugeordnet ist,
wobei jede Differenz einem Zwischenwert (ZW) entspricht, und
- **dass** im dritten Verarbeitungsschritt ein trainiertes neuronales Netz der Gesamtheit aller Zwischenwerte (ZW) den der jeweiligen Übertragungsqualität entsprechenden Wertungswert (WW) aus einer Mehrzahl möglicher Wertungswerte zuordnet.

2. Verfahren nach Anspruch 1,
**dadurch gekennzeichnet,**
**dass** die Sequenz (SS) eine Länge von etwa 2 bis 10 s hat.

3. Verfahren nach Anspruch 1,
**dadurch gekennzeichnet,**
**dass** die Sequenz (SS) ein Satz einer beliebigen Sprache ist, der teilweise mit einer männlichen und teilweise mit einer weiblichen Stimme gesprochen ist.

4. Verfahren nach Anspruch 1,
**dadurch gekennzeichnet,**
**dass** die Sequenz (SS) beliebig oft wiederholt und unmittelbar aufeinanderfolgend verwendet wird.

5. Verfahren nach Anspruch 1,
**dadurch gekennzeichnet,**
**dass** das Synchronisationsmuster (SM) eine Länge von etwa 50 bis 100 ms hat und so gebildet ist, dass es mittels einer Kreuzkorrelation leicht erkennbar ist.

6. Verfahren nach Anspruch 1,
**dadurch gekennzeichnet,**
**dass** die Sequenz (SS) in eine erste Vielzahl gleichlanger Zeitintervalle (ZI) zerlegt wird.

7. Verfahren nach Anspruch 1,
**dadurch gekennzeichnet,**
**dass** die Sequenz (SS) in eine erste Vielzahl ungleichlanger Zeitintervalle (ZI) zerlegt wird.

8. Verfahren nach Anspruch 1,
**dadurch gekennzeichnet,**
**dass** das neuronale Netz vorgängig seines eigentlichen Einsatzes dadurch trainiert wird, dass ihm wiederholt empfangsseitige Sequenzen (SS) entsprechend allen möglichen, unterschiedlichen Übertragungsqualitäten und damit gekoppelt der zugeordneten menschlichen Beurteilung dieser Übertragungsqualitäten eingegeben werden.

9. Verfahren nach Anspruch 1,
**dadurch gekennzeichnet,**
**dass** die erste Vielzahl 300 ist,
**dass** die zweite Vielzahl 256 ist,
**dass** die dritte Vielzahl 18 ist, und
**dass** die Mehrzahl möglicher Wertungswerte 2 bis 5 ist.

10. Verfahren nach Anspruch 1,
**dadurch gekennzeichnet,**
**dass** mit Hilfe einer Fuzzy-Logik ein vierter Verarbeitungsschritt vorgesehen ist, durch den die Mehrzahl möglicher Wertungswerte (WW) des neuronalen Netzes vergrössert wird.

11. Vorrichtung zum Beurteilen der Übertragungsqualität einer Sprachübertragungsstrecke umfassend senderseitige Mittel zum Aussenden von Prüfsignalen und empfängerseitige Mittel zum Beurteilen von zugeordneten Empfangssignalen in Bezug auf die Übertragungsqualität der Prüfsignale, **dadurch gekennzeichnet**,
a. dass die senderseitigen Mittel so ausgebildet sind, dass jedes Prüfsignal eine vorgegebene Sequenz (SS) menschlicher Sprache ist, der ein Synchronisationsmuster (SM) vorangestellt ist;
b. dass die empfängerseitigen Mittel so ausgebildet sind, dass wenigstens drei serielle Verarbeitungsschritte ausgeführt werden können, derart
c. dass im ersten Verarbeitungsschritt das jeweilige Synchronisationsmuster (SM) erkannt und hierdurch der Startzeitpunkt der nachfolgenden Sequenz (SS) festgelegt wird,
d. dass im zweiten Verarbeitungsschritt durch mehrere serielle Teilschritte eine erste Vielzahl jeweiliger Zwischenwerte (ZW) gebildet wird, indem die jeweilige Sequenz (SS) in eine entsprechende erste Vielzahl von Zeitintervallen (ZI) zerlegt wird, die jeweils eine zweite Vielzahl diskreter, zeitlich aufeinanderfolgender Amplitudenwerte (AP) umfassen, indem den jeweiligen Amplitudenwerten (AP) jedes Zeitintervalls (ZI) die jeweils passende Klasse einer dritten Vielzahl von Klassen zugeordnet wird, und indem für jedes Zeitintervall (ZI) die Differenz aus den jeweiligen Klasse und derjenigen Klasse gebildet wird, die dem entsprechenden Zeitintervall (ZI) für eine bei bester Übertragungsqualität empfangener Sequenz (SS) zugeordnet ist, wobei jede Differenz einem Zwischenwert (ZW) entspricht, und
e. dass im dritten Verarbeitungsschritt ein trainiertes neuronales Netz der Gesamtheit aller Zwischenwerte (ZW) den der jeweiligen Übertragungsqualität entsprechenden Wertungswert (WW) aus einer Mehrzahl möglicher Wertungswerte zuordnet.

12. Vorrichtung nach Anspruch 11, **dadurch gekennzeichnet, dass** die senderseitigen Mittel so ausgebildet sind, dass die Sequenz (SS) des Prüfsignals eine Länge von etwa 2 bis 10 s hat.

13. Vorrichtung nach Anspruch 11 oder 12, **dadurch gekennzeichnet, dass** die senderseitigen Mittel so ausgebildet sind, dass die Sequenz ein Satz einer beliebigen Sprache ist, der teilweise mit einer männlichen und teilweise mit einer weiblichen Stimme gesprochen ist.

14. Vorrichtung nach einem der Ansprüche 11 bis 13, **dadurch gekennzeichnet, dass** die senderseitigen Mittel so ausgebildet sind, dass die Sequenz (SS) beliebig oft wiederholt und unmittelbar aufeinanderfolgend verwendet wird.

15. Vorrichtung nach einem der Ansprüche 11 bis 14, **dadurch gekennzeichnet, dass** die senderseitigen Mittel so ausgebildet sind, dass das Synchronisationsmuster (SM) des Prüfsignals eine Länge von etwa 50 bis 100 ms hat und so gebildet ist, dass es mittels einer Kreuzkorrelation leicht erkennbar ist.

16. Vorrichtung nach einem der Ansprüche 11 bis 15, **dadurch gekennzeichnet, dass** die empfängerseitigen Mittel so ausgebildet sind, dass die Sequenz (SS) in eine erste Vielzahl gleich langer Zeitintervalle (ZI) zerlegt wird.

17. Vorrichtung nach einem der Ansprüche 11 bis 15, **dadurch gekennzeichnet, dass** die empfängerseitigen Mittel so ausgebildet sind, dass die Sequenz (SS) in eine erste Vielzahl ungleich langer Zeitintervalle (ZI) zerlegt wird.

18. Vorrichtung nach einem der Ansprüche 11 bis 17, **dadurch gekennzeichnet, dass** das neuronale Netz in den empfängerseitigen Mittel so ausgebildet ist, dass es vorgängig seines eigentlichen Einsatzes dadurch trainiert worden ist, dass ihn wiederholt empfangsseitige Sequenzen entsprechend allen möglichen unterschiedlichen Übertragungsqualitäten und damit gekoppelt der zugeordneten menschlichen Beurteilung dieser Übertragungsqualitäten eingegeben worden sind.

19. Vorrichtung nach einem der Ansprüche 11 bis 18, **dadurch gekennzeichnet, dass** die empfängerseitigen Mittel so ausgebildet sind, dass die erste Vielzahl 300 ist, dass die zweite Vielzahl 256 ist, dass die dritte Vielzahl 18 ist, und dass die Mehrzahl möglicher Wertungswerte 2 bis 5 ist.

20. Vorrichtung nach einem der Ansprüche 11 bis 19, **dadurch gekennzeichnet, dass** eine Fuzzy-Logik für einen vierten Verarbeitungsschritt vorgesehen ist, durch den die Mehrzahl möglicher Wertungswerte des neuronalen Netzes vergrössert wird.

21. Computerprogrammprodukt zur Durchführung eines Verfahrens zum Beurteilen der Übertragungsqualität einer Sprachübertragungsstrecke, wobei senderseitig Prüfsignale ausgesendet und empfängerseitig die zugeordneten Empfangssignale in Bezug auf die Übertragungsqualität der Prüfsignale beurteilt werden, **dadurch gekennzeichnet**,
a. dass jedes Prüfsignal eine vorgegebene Sequenz (SS) menschlicher Sprache ist, der ein Synchronisationsmuster (SM) vorangestellt ist;
b. dass empfängerseitig wenigstens drei serielle Verarbeitungsschritte ausgeführt werden,
c. dass im ersten Verarbeitungsschritt das jeweilige Synchronisationsmuster (SM) erkannt und hierdurch der Startzeitpunkt der nachfolgenden Sequenz (SS) festgelegt wird,
d. dass im zweiten Verarbeitungsschritt durch mehrere serielle Teilschritte eine erste Vielzahl jeweiliger Zwischenwerte (ZW) gebildet wird, indem die jeweilige Sequenz (SS) in eine entsprechende erste Vielzahl von Zeitintervallen (ZI) zerlegt wird, die jeweils eine zweite Vielzahl diskreter, zeitlich aufeinanderfolgender Amplitudenwerte (AP) umfassen, indem den jeweiligen Amplitudenwerten (AP) jedes Zeitintervalls (ZI) die jeweils passende Klasse einer dritten Vielzahl von Klassen zugeordnet wird, und indem für jedes Zeitintervall (ZI) die Differenz aus den jeweiligen Klasse und derjenigen Klasse gebildet wird, die dem entsprechenden Zeitintervall (ZI) für eine bei bester Übertragungsqualität empfangener Sequenz (SS) zugeordnet ist, wobei jede Differenz einem Zwischenwert (ZW) entspricht, und
e. dass im dritten Verarbeitungsschritt ein trainiertes neuronales Netz der Gesamtheit aller Zwischenwerte (ZW) den der jeweiligen Übertragungsqualität entsprechenden Wertungswert (WW) aus einer Mehrzahl möglicher Wertungswerte zuordnet.

22. Computerprogrammprodukt nach Anspruch 21, **dadurch gekennzeichnet, dass** die Sequenz (SS) des Prüfsignals eine Länge von etwa 2 bis 10 s hat.

23. Computerprogrammprodukt nach Anspruch 21 oder 22, **dadurch gekennzeichnet, dass** die Sequenz (SS) ein Satz einer beliebigen Sprache ist, der teilweise mit einer männlichen und teilweise mit einer weiblichen Stimme gesprochen ist.

24. Computerprogrammprodukt nach einem den Ansprüche 21 bis 23, **dadurch gekennzeichnet, dass** die Sequenz (SS) beliebig oft wiederholt und unmittelbar aufeinanderfolgend verwendet wird.

25. Computerprogrammprodukt nach einem der Ansprüche 21 bis 24, **dadurch gekennzeichnet, dass** das Synchronisationsmuster (SM) des Prüfsignals eine Länge von etwa 50 bis 100 ms hat und so gebildet ist, dass es mittels einer Kreuzkorrelation leicht erkennbar ist.

26. Computerprogrammprodukt nach einem der Ansprüche 21 bis 25, **dadurch gekennzeichnet, dass** die Sequenz (SS) in eine erste Vielzahl gleich langer Zeitintervalle (ZI) zerlegt wird.

27. Computerprogrammprodukt nach einem der Ansprüche 21 bis 25, **dadurch gekennzeichnet, dass** die Sequenz (SS) in eine erste Vielzahl ungleich langer Zeitintervalle (ZI) zerlegt wird.

28. Computerprogrammprodukt nach einem der Ansprüche 21 bis 27, **dadurch gekennzeichnet, dass** das neuronale Netz so ausgebildet ist, dass es vorgängig seines eigentlichen Einsatzes dadurch trainiert worden ist, dass ihn wiederholt empfangsseitige Sequenzen entsprechend allen möglichen unterschiedlichen Ubertragungsqualitäten und damit gekoppelt der zugeordneten menschlichen Beurteilung dieser Übertragungsquafitäten eingegeben worden sind.

29. Computerprogrammprodukt nach einem den Ansprüche 21 bis 28, **dadurch gekennzeichnet, dass** die erste Vielzahl 300 ist, dass die zweite Vielzahl 256 ist, dass die dritte Vielzahl 18 ist, und dass die Mehrzahl möglicher Wertungswerte 2 bis 5 ist.

30. Computerprogrammprodukt nach einem der Ansprüche 21 bis 29, **dadurch gekennzeichnet, dass** eine Fuzzy-Logik für einen vierten Verarbeitungsschritt vorgesehen ist, durch den die Mehrzahl möglicher Wertungswerte des neuronalen Netzes vergrössert wird.

## Claims

1. Method for judging the quality of transmission of a speech transmission link,
involving transmitting test signals at the transmitting end and, at the receiving end, judging the associated received signals in relation to the quality of the transmission,
**characterised in that**
- each test signal is a prespecified human language sequence (SS) preceded by a synchronisation pattern (SM),
- at least three serial processing steps are provided at the receiving end,
- the respective synchronisation pattern (SM) is recognised in the first processing step and by this means the start time of the following sequence (SS) is fixed,
- in the second processing step a first multiplicity of respective intermediate values (ZW) are formed by a plurality of serial sub-steps,
by breaking down the respective sequence (SS) into a corresponding first multiplicity of time intervals (ZI), each of which comprises a second multiplicity of discrete temporally successive amplitude values (AP),
by assigning to the respective amplitude values (AP) of each time interval (ZI) the respectively appropriate class out of a third multiplicity of classes, and
by constituting for each time interval (ZI) the difference of the respective class and the particular class that is assigned to the corresponding time interval (ZI) for a received sequence (SS) with the best possible transmission quality, with each difference corresponding to an intermediate value (ZW) and,
- in the third processing step a trained neural network assigns to the entirety of all the intermediate values (ZW) the rating value (WW) that corresponds to the respective transmission quality, out of a plurality of possible rating values.

2. Method according to claim 1,
**characterised in that** the sequence (SS) has a duration of around 2 to 10 sec.

3. Method according to claim 1,
**characterised in that** the sequence (SS) is a sentence in any desired language, which is spoken in part by a male voice and in part by a female voice.

4. Method according to claim 1,
**characterised in that** the sequence (SS) is repeated as often as desired and used directly in succession.

5. Method according to claim 1,
**characterised in that** the synchronisation pattern (SM) has a duration of around 50 to 100 ms and is so constituted that it is readily recognisable by means of a cross-correlation.

6. Method according to claim 1,
**characterised in that** the sequence (SS) is broken down into a first multiplicity of time intervals (ZI) of equal durations.

7. Method according to claim 1,
**characterised in that** the sequence (SS) is broken down into a first multiplicity of time intervals (ZI) of different durations.

8. Method according to claim 1,
**characterised in that** prior to its actual use the neural network is trained by repeatedly feeding into it sequences (SS) at the receiving end that correspond to every possible different transmission quality and, coupled therewith, to the associated human judgment of said transmission quality.

9. Method according to claim 1,
**characterised in that** the first multiplicity is 300,
the second multiplicity is 256,
the third multiplicity is 18, and
the plurality of possible rating values is 2 to 5,

10. Method according to claim 1,
**characterised in that** using fuzzy logic a fourth processing step is provided, by means of which the plurality of possible rating values (WW) of the neural network is increased.

11. Device for judging the quality of transmission of a speech transmission link, comprising means at the transmitting end for transmitting test signals and means at the receiving end for judging the associated received signals in relation to the quality of transmission of the test signals,
**characterised in that**
a. the means at the transmitting end are so configured that each test signal is a prespecified human language sequence (SS) preceded by a synchronisation pattern (SM);
b. the means at the receiving end are so configured that at least three serial processing steps can be carried out, such that
c. in the first processing step the respective synchronisation pattern (SM) is recognised and by means the start time of the following sequence (SS) is fixed,
d. in the second processing step a first multiplicity of respective intermediate values (ZW) is constituted using a plurality of serial sub-steps, by breaking down the respective sequence (SS) into a corresponding first multiplicity of time intervals (ZI), each of which comprises a second multiplicity of discrete, temporally successive amplitude values (AP), by assigning to the respective amplitude values (AP) of each time interval (ZI) the particular appropriate class out of a third multiplicity of classes, and by constituting, for each time interval (ZI), the difference of the respective class and the particular class that has been assigned to the corresponding time interval (ZI) for a sequence (SS) received with the ideal transmission quality, each difference corresponding to an intermediate value (ZW), and
e. in the third processing step a trained neural network assigns to the entirety of all the intermediate values (ZW) the rating value (WW) that corresponds to the respective transmission quality, out of a plurality of possible rating values.

12. Device according to claim 11, **characterised in that** the means at the transmitting end are so configured that the test signal sequence (SS) has a duration of around 2 to 10 sec.

13. Device according to claim 11 or 12, **characterised in that** the means at the transmitting end are so configured that the sequence is a sentence in any desired language, which is spoken in part by a male voice and in part by a female voice.

14. Device according to any of claims 11 to 13, **characterised in that** the means at the transmitting end are so configured that the sequence (SS) is repeated as often as desired and used directly in succession.

15. Device according to any of claims 11 to 14, **characterised in that** the means at the transmitting end are so configured that the test signal synchronisation pattern (SM) has a duration of around 50 to 100 ms and is so constituted that it is readily recognisable by means of a cross-correlation.

16. Device according to any of claims 11 to 15, **characterised in that** the means at the receiving end are so configured that the sequence (SS) is broken down into a first multiplicity of time intervals (ZI) of equal duration.

17. Device according to any of claims 11 to 15, **characterised in that** the means at the receiving end are so configured that the sequence (SS) is broken down into a first multiplicity of time intervals (ZI) of different durations.

18. Device according to any of claims 11 to 17, **characterised in that** the neural network in the means at the receiving end is so configured that prior to its actual use it has been trained by having repeatedly fed into it sequences at the receiving end that correspond to every possible different transmission quality and, coupled therewith, to the associated human judgment of said transmission quality.

19. Device according to any of claims 11 to 18, **characterised in that** the means at the receiving end are so configured that the first multiplicity is 300, the second multiplicity is 256, the third multiplicity is 18, and the plurality of possible rating values is 2 to 5.

20. Device according to any of claims 11 to 19, **characterised by** the provision of a fuzzy logic for a fourth processing step by which the plurality of possible rating values of the neuronal network is increased.

21. Computer program product for carrying out a method for judging the quality of transmission of a speech transmission link, involving transmitting test signals at the transmitting end and at the receiving end judging the associated received signals in relation to the transmission quality of the test signals, **characterised in that**
a. each test signal is a prespecified human language sequence (SS) preceded by a synchronisation pattern (SM),
b. at least three serial processing steps are performed at the receiving end,
c. the respective synchronisation pattern (SM) is recognised in the first processing step and by this means the start time of the following sequence (SS) is fixed,
d. in the second processing step a first multiplicity of respective intermediate values (ZW) are constituted by a plurality of serial sub-steps, by breaking down the respective sequence (SS) into a corresponding first multiplicity of time intervals (ZI), each of which comprises a second multiplicity of discrete temporally successive amplitude values (AP), by assigning to the respective amplitude values (AP) of each time interval (ZI) the particular appropriate class out of a third multiplicity of classes, and by constituting for each time interval (ZI) the difference of the respective class and the particular class that is assigned to the corresponding time interval (ZI) for a received sequence (SS) with the best possible transmission quality, with each differential corresponding to an intermediate value (ZW) and,
e. in the third processing step a trained neural network assigns to the entirety of all the intermediate values (ZW) the rating value (WW) that corresponds to the respective transmission quality, out of a plurality of possible rating values.

22. Computer program product according to claim 21, **characterised in that** the test signal sequence (SS) has a duration of around 2 to 10 sec.

23. Computer program product according to claim 21 or 22, **characterised in that** the sequence (SS) is a sentence in any desired language, which is spoken in part by a male voice and in part by a female voice.

24. Computer program product according to any of claims 21 to 23, **characterised in that** the sequence (SS) is repeated as often as desired and used directly in succession.

25. Computer program product according to any of claims 21 to 24, **characterised in that** the test signal synchronisation pattern (SM) has a duration of around 50 to 100 ms and is so constituted that it is readily recognisable by means of a cross-correlation.

26. Computer program product according to any of claims 21 to 25, **characterised in that** the sequence (SS) is broken down into a first multiplicity of time intervals (ZI) of equal duration.

27. Computer program product according to any of claims 21 to 25, **characterised in that** the sequence (SS) is broken down into a first multiplicity of time intervals (ZI) of different durations.

28. Computer program product according to any of claims 21 to 27, **characterised in that** the neuronal network is so configured that prior to its actual use it has been trained by having repeatedly fed into it sequences at the receiving end that correspond to every possible different transmission quality and, coupled therewith, to the associated human judgment of said transmission quality.

29. Computer program product according to any of claims 21 to 28, **characterised in that** the first multiplicity is 300, the second multiplicity is 256, the third multiplicity is 18, and the plurality of possible rating values is 2 to 5.

30. Computer program product according to any of claims 21 to 29, **characterised by** the provision of a fuzzy logic for a fourth processing step by which the plurality of possible rating values of the neural network is increased.

## Revendications

1. Procédé pour évaluer la qualité de transmission d'une voie de transmission de la parole,
selon lequel des signaux de contrôle sont envoyés du côté émetteur et les signaux de réception associés sont évalués sur le côté récepteur du point de vue de la qualité de transmission,
**caractérisé en ce que**,
- chaque signal de contrôle est une séquence prédéterminée (SS) de paroles humaines qui est précédée d'un motif de synchronisation (SM),
- côté réception sont prévus au moins trois étapes de traitement en série,
- dans la première étape de traitement le motif de synchronisation (SM) respectif est identifié et de ce fait le point de départ de la séquence suivante (SS) est fixé,
- dans la seconde étape de traitement on forme un premier ensemble de valeurs intermédiaires respectives (ZW) par plusieurs étapes partielles en série, au cours desquelles la séquence respective (SS) est divisée en un premier ensemble correspondant d'intervalles de temps (ZI) qui comprennent respectivement un second ensemble de valeurs d'amplitude (AP) discrètes qui se succèdent dans le temps,
la classe respectivement correspondante d'un troisième ensemble de classes étant associée et, aux valeurs d'amplitude respectives (AP) de chaque intervalle de temps (ZI)
pour chaque intervalle de temps (ZI) on forme la différence entre la classe respective et la classe qui est associée à l'intervalle de temps correspondant (ZI) pour une séquence reçue (SS) dans le cas de la meilleure qualité de transmission, chaque différence correspondant à une valeur intermédiaire (ZW), et
- dans la troisième étape de traitement, un réseau neuronal entraîné associe à l'ensemble de toutes les valeurs intermédiaires (ZW) la valeur de classement (WW) qui correspond à la qualité de transmission respective, parmi une multiplicité de valeurs de classement possibles.

2. Procédé selon la revendication 1,
**caractérisé en ce que** la séquence (SS) a une longueur d'environ 2 à 10 s.

3. Procédé selon la revendication 1,
**caractérisé en ce que** la séquence (SS) est une phrase dans une langue quelconque qui est prononcée en partie par une voix masculine et en partie par une voix féminine.

4. Procédé selon la revendication 1,
**caractérisé en ce que** la séquence (SS) est utilisée de manière répétée aussi fréquemment que l'on souhaite et selon une succession directe.

5. Procédé selon 1a revendication 1,
**caractérisé en ce que** le motif de synchronisation (SM) a une longueur d'environ 50 à 100 ms et il est formé de façon à pouvoir être facilement identifiable au moyen d'une inter-corrélation.

6. Procédé selon la revendication 1,
**caractérisé en ce que** la séquence (SS) est divisée en un premier ensemble d'intervalles de temps (ZI) de même longueur.

7. Procédé selon la revendication 1,
**caractérisé en ce que** la séquence (SS) est divisée en un premier ensemble d'intervalles de temps (ZI) de longueurs différentes.

8. Procédé selon la revendication 1,
**caractérisé en ce que** préalablement à son utilisation proprement dite, le réseau neuronal a été entraîné en lui envoyant des séquences côté réception (SS) en fonction de toutes les qualités de transmission différentes possibles et par conséquent d'une manière liée à l'évaluation humaine associée de ces qualités de transmission.

9. Procédé selon la revendication 1,
**caractérisé en ce que**,
le premier ensemble est égal à 300,
le second ensemble est égal à 256,
le troisième ensemble est égal à 18, et
le nombre de toutes les valeurs de classement possibles est compris entre 2 à 5.

10. Procédé selon la revendication 1,
**caractérisé en ce que**, pour une quatrième étape de traitement, une logique floue est prévue avec laquelle le nombre de valeurs possibles de classement (WW) du réseau neuronal est accru.

11. Dispositif pour évaluer la qualité de transmission d'une voie de transmission de parole comprenant des moyens situés côté émetteur pour émettre des signaux de contrôle et des moyens situés côté récepteur pour évaluer les signaux de réception associés, concernant la qualité de transmission des signaux de contrôle, **caractérisé en ce**
a. que les moyens situés côté émetteur sont agencés de telle sorte que chaque signal de contrôle est une séquence prédéterminée (SS) de paroles humaines, qui est précédée d'un motif de synchronisation (SM);
b. que les moyens situés côté récepteur sont agencés de telle sorte qu'au moins trois étapes de traitement en série doivent être exécutées de telle sorte
c. que, lors de la première étape de traitement, le motif de synchronisation respectif (SM) est identifié et que de ce fait le point de départ de la séquence suivante (SS) est fixé,
d. que, lors de la seconde étape de traitement, un premier ensemble de valeurs intermédiaires respectives (ZW) est formé en plusieurs étapes successives: en divisant la séquence respective (SS) en un premier ensemble correspondant d'intervalles de temps (ZI), qui comprennent chacun un second ensemble de valeurs d'amplitude discrètes (AP) qui se succèdent dans le temps ; en associant la classe respectivement adaptée d'un troisième ensemble de classes aux valeurs d'amplitude respectives (AP) de chaque intervalle de temps (ZI) ; et , pour chaque intervalle de temps (ZI), en formant la différence entre la classe respective et la classe qui est associée à l'intervalle de temps correspondant (ZI) pour une séquence (SS) reçue dans le cas de la meilleure qualité de transmission, chaque différence correspondant à une valeur intermédiaire (ZW), et
e. que lors de la troisième étape de traitement, un réseau neuronal entraîné associe, à l'ensemble de toutes les valeurs intermédiaires (ZW) , la valeur de classement (WW) qui correspond à la qualité de transmission respective, parmi une multiplicité de valeurs de classement possibles.

12. Dispositif selon la revendication 11, **caractérisé en ce que** les moyens situés côté émetteur sont agencés de telle sorte que la séquence (SS) du signal de contrôle possède une longueur comprise entre environ 2 et 10 s.

13. Dispositif selon la revendication 11 ou 12, **caractérisé en ce que** les moyens situés côté émetteur sont agencés de telle sorte que la séquence est une phrase dans une langue quelconque, qui est prononcée en partie avec une voix d'homme et en partie avec une voix de femme.

14. Dispositif selon l'une des revendications 11 à 13, **caractérisé en ce que** les moyens situés côté émetteur sont agencés de telle sorte que la séquence (SS) est utilisée d'une manière répétée aussi fréquemment que l'on veut et selon une succession directe.

15. Dispositif selon l'une des revendications 11 à 14, **caractérisé en ce que** les moyens situés côté émetteur sont agencés de telle sorte que le motif de synchronisation (SM) du signal de contrôle possède une longueur compris entre environ 50 et 100 ms et est formée de telle sorte qu'il peut être aisément identifié au moyen d'une inter-corrélation.

16. Dispositif selon l'une des revendications 11 à 15, **caractérisé en ce que** les moyens situés côté récepteur sont agencés de telle sorte que la séquence (SS) est divisée en un premier ensemble d'intervalles de temps (ZI) de même longueur.

17. Dispositif selon l'une des revendications 11 à 15, **caractérisé en ce que** les moyens situés côté récepteur sont agencés de telle sorte que la séquence (SS) est divisée en un premier ensemble d'intervalles de temps (ZI) ayant des longueurs différentes.

18. Dispositif selon l'une des revendications 11 à 17, **caractérisé en ce que** le réseau neuronal dans les moyens situés côté récepteur est agencé de telle sorte qu'il a été entraîné avant son utilisation proprement dite en lui envoyant des séquences côté réception d'une manière répétée, conformément à toutes les qualités de transmission différentes possibles et par conséquent d'une manière liée à l'évaluation humaine associée de ces qualités de transmission.

19. Dispositif selon l'une des revendications 11 à 18, **caractérisé en ce que** les moyens situés côté récepteur sont agencés de telle sorte que le premier ensemble est égal à 300, que le second ensemble est égal à 256, que le troisième ensemble est égal à 18 et que le nombre de valeurs de classement possibles est compris entre 2 et 5.

20. Dispositif selon l'une des revendications 11 à 19, **caractérisé en ce qu'**il est prévu, pour une quatrième étape de traitement, une logique floue, au moyen de laquelle le nombre de valeurs possibles de classement du réseau neuronal est accru.

21. Produit de programme d'ordinateur, pour la mise en oeuvre d'un procédé pour évaluer la qualité de transmission d'une voie de transmission de parole, selon lequel des signaux de contrôle sont émis côté émetteur et les signaux de réception associés sont évalués côté récepteur par rapport à la qualité de transmission des signaux de contrôle, **caractérisé en ce que**
a. chaque signal de contrôle est une séquence prédéterminée (SS) en langage humain, qui est précédée d'un motif de synchronisation (SM);
b. au moins trois étapes de traitement en série sont exécutées côté récepteur,
c. dans la première étape de traitement, le motif de synchronisation éventuel (SM) est identifié et de ce fait le point de départ de la séquence suivante (SS) est fixé,
d. dans la seconde étape de traitement, un premier ensemble de valeurs intermédiaires respectives (ZW) est formé en plusieurs étapes successives: en divisant la séquence respective (SS) en un premier ensemble correspondant d'intervalles de temps (ZI), qui comprennent chacun un second ensemble de valeurs discrètes d'amplitude (AP) qui se succèdent dans le temps ; en associant la classe respectivement adaptée d'un troisième ensemble de classes aux valeurs d'amplitude respectives (AP) de chaque intervalle de temps (ZI) ; et , pour chaque intervalle de temps (ZI), en formant la différence entre la classe respective et la classe qui est associée à l'intervalle de temps correspondant (ZI) pour une séquence (SS) reçue dans le cas de la meilleure qualité de transmission, chaque différence correspondant à une valeur intermédiaire (ZW), et
e. dans la troisième étape de traitement, un réseau neuronal entraîné associe, à l'ensemble de toutes les valeurs intermédiaires (ZW) , la valeur de classement (WW) qui correspond à la qualité de transmission respective, parmi une multiplicité de valeurs de classement possibles.

22. Produit de programme d'ordinateur selon la revendication 21, **caractérisé en ce que** la séquence (SS) du signal de contrôle possède une longueur comprise entre environ 2 et 10 s.

23. Produit de programme d'ordinateur selon la revendication 21 ou 22, **caractérisé en ce que** la séquence est une phrase dans une langue quelconque, qui est prononcée en partie avec une voix d'homme et en partie avec une voix de femme.

24. Produit de programme d'ordinateur selon l'une des revendications 21 à 23, **caractérisé en ce que** la séquence (SS) est utilisée d'une manière répétée aussi fréquemment que l'on veut et selon une succession directe.

25. Produit de programme d'ordinateur selon l'une des revendications 21 à 24, **caractérisé en ce que** le motif de synchronisation (SM) du signal de contrôle possède une longueur compris entre environ 50 et 100 ms et est formé de telle sorte qu'il peut être aisément identifié au moyen d'une inter-corrélation.

26. Produit de programme d'ordinateur selon l'une des revendications 21 à 25, **caractérisé en ce que** la séquence (SS) est divisée en un premier ensemble d'intervalles de temps (ZI) de même longueur.

27. Produit de programme d'ordinateur selon l'une des revendications 21 à 25, **caractérisé en ce que** la séquence (SS) est divisée en un premier ensemble d'intervalles de temps (ZI) ayant des longueurs différentes.

28. Produit de programme d'ordinateur selon l'une des revendications 21 à 27, **caractérisé en ce que** le réseau neuronal est agencé de telle sorte qu'il a été entraîné avant son utilisation proprement dite en lui envoyant des séquences côté réception d'une manière répétée, conformément à toutes les qualités de transmission différentes possibles et par conséquent d'une manière liée à l'évaluation humaine associée de ces qualités de transmission.

29. Produit de programme d'ordinateur selon l'une des revendications 21 à 28, **caractérisé en ce que** le premier ensemble est égal à 300, que le second ensemble est égal à 256, que le troisième ensemble est égal à 18 et que le nombre de valeurs de classement possibles est compris entre 2 et 5.

30. Produit de programme d'ordinateur selon l'une des revendications 21 à 29, **caractérisé en ce qu'**il est prévu, pour une quatrième étape de traitement, une logique floue, au moyen de laquelle le nombre de valeurs possibles de classement du réseau neuronal est accru.
